(19) Europäisches Patentamt
European Patent Office
Office européen des brevets

(11) **EP 2 733 032 B1**

(12) **FASCICULE DE BREVET EUROPEEN**

(45) Date de publication et mention
de la délivrance du brevet:
**11.01.2017 Bulletin 2017/02**

(51) Int Cl.:
***B60T 13/74*** *(2006.01)*

(21) Numéro de dépôt: **13192833.5**

(22) Date de dépôt: **14.11.2013**

(54) **Servofrein électrique pour la commande du maître-cylindre d'un circuit de frein**

Elektrische Servobremse für die Steuerung des Hauptzylinders in einem Bremskreislauf

Electric brake booster for controlling the master cylinder of a brake circuit

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.11.2012 FR 1260958**

(43) Date de publication de la demande:
**21.05.2014 Bulletin 2014/21**

(73) Titulaire: **ROBERT BOSCH GMBH
70442 Stuttgart (DE)**

(72) Inventeurs:
- **Winkler, Roman**
  **92600 Asnieres sur Seine (FR)**
- **Richard, Philippe**
  **77500 CHELLES (FR)**
- **Gaffe, Francois**
  **44420 La Turballe (FR)**
- **Cagnac, Bastien**
  **60660 Cramoisy (FR)**

(56) Documents cités:
**WO-A2-2010/069658      DE-U1-202010 017 605
JP-A- 2006 281 992**

EP 2 733 032 B1

## Description

### Domaine de l'invention

La présente invention a pour objet un servofrein électrique commandant un maître-cylindre de circuit de frein, relié à une tige de commande actionnée par la pédale de frein, comprenant :

- un corps de servofrein recevant un piston d'actionnement entraîné en translation par un moteur électrique et poussant le piston du maître-cylindre par l'intermédiaire d'un piston d'assistance agissant sur la tige de poussée reliée au piston du maître-cylindre,
- un piston plongeur logé coulissant dans le piston d'assistance et relié à la tige de commande, elle-même reliée à la pédale de frein,
- un ressort de coupure interposé entre le piston d'assistance et le piston plongeur pour repousser celui-ci,
- le piston plongeur avançant librement d'une faible distance au début d'une action de freinage sans toucher la tige de poussée, contre la réaction du ressort de coupure en cas de freinage normal ou pour pousser directement la tige de poussée en cas de défaillance du servofrein électrique,
- le piston plongeur étant rappelé en position de pédale relâchée à la fin d'une action de freinage par rapport au piston d'assistance repoussé par le ressort de coupure.

### Etat de la technique

On connaît déjà de tels servofreins électriques pour la commande du maître-cylindre d'un circuit de frein.

Le document DE202010017605-U1, par exemple, divulgue un servofrein électrique (1) commandant un maître-cylindre (7) de circuit de frein, relié à une tige de commande actionnée par la pédale de frein, comprenant : - un corps de servofrein (1) recevant un piston d'actionnement (26) entraîné en translation par un moteur électrique (23) et poussant le piston du maître-cylindre par l'intermédiaire d'un piston d'assistance (4) agissant sur la tige de poussée (14) reliée au piston du maître-cylindre, - un piston plongeur (2) logé coulissant dans le piston d'assistance et relié à la tige de commande, elle-même reliée à la pédale de frein, - un ressort de coupure (5) interposé entre le piston d'assistance (4) et le piston plongeur (2) pour repousser celui-ci, - le piston plongeur (2) avançant librement d'une faible distance au début d'une action de freinage sans toucher la tige de poussée (14), contre la réaction du ressort de coupure (5) en cas de freinage normal ou pour pousser directement la tige de poussée en cas de défaillance du servofrein électrique, - le piston plongeur (2) étant rappelé en position de pédale relâchée à la fin d'une action de freinage par rapport au piston d'assistance repoussé par le ressort de coupure (5).

### But de l'invention

La présente invention a pour but de simplifier les servofreins électriques et en particulier de permettre de réduire le dimensionnement du ressort de rappel du piston d'actionnement et du piston d'assistance et de réduire par là l'encombrement du servofrein dans la direction axiale du système servofrein-maître-cylindre-tige de commande pour faciliter l'intégration de ce type de servofrein dans un véhicule.

### Exposé et avantages de l'invention

A cet effet, l'invention a pour objet un servofrein du type défini ci-dessus, caractérisé en ce que le piston d'assistance est muni d'un levier du second genre relié de manière articulée par sa première extrémité à l'arrière du piston d'assistance et appuyé par un point intermédiaire proche de sa première extrémité, contre le piston plongeur, la seconde extrémité étant destinée à s'appuyer contre la butée de fin de course arrière constituée par le boîtier du servofrein et définissant la position de repos du servofrein en basculant sous la poussée du ressort de rappel repoussant le piston d'assistance portant le point d'appui du levier et comprimant le ressort de coupure par le piston plongeur appuyé contre le point intermédiaire du levier.

Le servofrein selon l'invention grâce à l'effet démultiplicateur réalisé par le levier pour le rappel du piston d'actionnement et du piston d'assistance en position de repos (en même temps d'ailleurs que le piston plongeur), permet de réduire considérablement la force que doit exercer le ressort de rappel du piston d'actionnement et du piston d'assistance, ce qui permet de réduire le dimensionnement de ce ressort et par suite fortement l'encombrement du servofrein électrique.

Malgré cette réduction de la dimension du ressort de rappel, la tige de commande et la pédale de frein restent sollicitées en position de repos par la force de rappel conventionnelle qui est, par exemple de 100N, alors que la force que doit développer le ressort de rappel, aux efforts près nécessaires à vaincre les forces de frottement, est seulement d'une fraction de cette force, par exemple un quart de cette force.

Suivant un développement particulièrement avantageux, le piston d'assistance comporte un logement transversal recevant la première extrémité du levier et limitant le basculement du levier par rapport au piston entre la position de repos du piston, le levier étant sensiblement parallèle au fond et une position basculée du levier retenant le piston plongeur, l'effet du levier s'exerçant après une action de freinage, lorsque la deuxième extrémité du levier arrive contre la butée de fin de course et le point d'appui intermédiaire, repousse le piston plongeur contre l'action du ressort de coupure par la poussée exercée par le ressort de rappel sur le piston d'assistance, poussant ainsi le premier point d'appui du levier avec la force égale à la réaction du point d'appui à la seconde extrémité du levier, réaction démultipliée par rapport à la force antagoniste exercée par le ressort de coupure sur le piston plongeur portant le point d'appui intermédiaire du levier.

Cette organisation et disposition du levier à l'arrière du piston d'assistance permettent de disposer d'un rapport de démultiplication particulièrement intéressant.

Suivant une autre caractéristique avantageuse, le logement transversal a une section sensiblement trapézoïdale avec un point de basculement et un point d'appui pour le levier en limite de basculement.

Cette forme de logement assure en même temps que la fonction d'appui de basculement du levier également celle de limitation du basculement et de retenue du piston plongeur vers sa position de repos.

Suivant une autre caractéristique avantageuse le levier a une disposition diamétrale occupant la plus grande dimension diamétrale disponible à l'arrière du piston d'assistance dans le cylindre du piston d'actionnement pour avoir la plus grande longueur possible.

Suivant une autre caractéristique avantageuse le levier a une ouverture pour le passage de la tige de commande reliée à l'arrière du piston plongeur.

Suivant une autre caractéristique avantageuse le levier et/ou l'arrière du piston d'assistance ont des appuis pour définir la position de fin de course de repos du levier.

Globalement, le levier s'intègre simplement au servofrein électrique sans nécessiter de modification globale des autres éléments du servofrein et en particulier de la double transmission qui commande le piston d'actionnement par deux crémaillères, des pignons droits et des roues à vis entraînées par la vis en sortie du moteur électrique du servofrein électrique.

## Dessins

La présente invention sera décrite ci-après de manière plus détaillée à l'aide d'un exemple de réalisation d'un servofrein électrique représenté schématiquement dans les dessins annexés et présenté en parallèle à un servofrein électrique connu :

- la figure 1 est une coupe axiale partielle schématique d'un servofrein électrique connu,
- la figure 2 montre très schématiquement dans ses parties 2A et 2B respectivement l'arrière d'un servofrein selon l'invention et d'un servofrein connu dans la position de repos,
- la figure 3 montre dans ses parties 3A et 3B respectivement un servofrein selon l'invention et un servofrein connu, en position de fin d'actionnement du servofrein, après le relâché de la pédale,
- la figure 4 montre dans ses parties 4A et 4B respectivement le servofrein selon l'invention et le servofrein se rapprochant de la position de repos.

## Description d'un mode de réalisation de l'invention

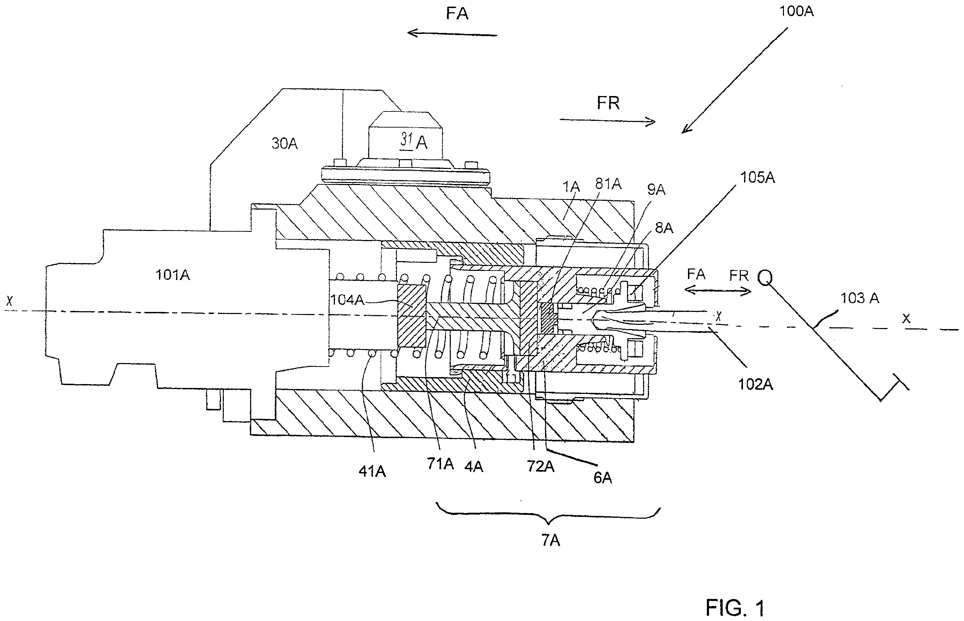

Pour faciliter la compréhension et l'intérêt du servofrein électrique de l'invention, sa description sera faite en parallèle à celle d'un servofrein électrique, connu. Pour situer l'invention dans son contexte, la figure 1 représente une coupe axiale d'un servofrein connu montrant les parties du servofrein essentielles pour la compréhension de l'invention alors que pour faciliter la description, les figures suivantes sont une représentation très schématique et partielle d'un servofrein électrique selon l'invention et celui de l'état de la technique dans des positions de fonctionnement voisines. Par conversion d'orientation, le côté tourné vers la pédale de frein est l'arrière et le côté tourné vers le maître-cylindre est l'avant.

Selon la figure 1, le servofrein électrique 100A est intercalé entre la pédale de frein 103A et sa tige d'actionnement 102A et le maître-cylindre 101A. Le servofrein électrique se compose d'un boîtier 1A fixé au maître-cylindre 101A et portant un moteur électrique 30A relié par une transmission mécanique 31A non détaillée à un piston d'actionnement 4A coulissant dans le cylindre de guidage 13A du boîtier 1A suivant l'axe XX général de l'ensemble servofrein/maître-cylindre. Le piston d'actionnement 4A reçoit lui-même un piston d'assistance 6A s'appuyant sur une tige de poussée 7A, elle-même reliée au piston 104A du maitre-cylindre 101A. Le piston d'assistance 6A est repoussé en position de repos par un ressort de rappel 41A. Pour le mouvement de freinage, le piston d'actionnement 4A s'accroche au piston d'assistance 6A par une butée mécanique d'entraînement 42A active dans la direction d'actionnement FA.

Le piston d'assistance 6A loge dans une position coaxiale (XX) un piston plongeur 8A relié en translation à la tige de commande 102A, elle-même reliée à la pédale de frein 103A. Le piston plongeur 8A est séparé de la tige de poussée 7A par un disque de réaction 72A. Le piston plongeur 8A est repoussé dans la direction FR vers sa position de repos par un ressort de coupure 9A prenant appui contre le piston d'assistance 6A.

Dans des conditions normales de freinage, la pédale de frein 103A est actionnée et déplace la tige de commande 102A dont le mouvement de déplacement (FA) est détecté par un capteur non représenté. Ce capteur commande le servofrein électrique 100A aussi longtemps que la pédale de frein est poussée et que la tige de commande 102A et le piston plongeur 8A sont maintenus dans la position actionnée. Le piston plongeur 8A ne s'appuie pas normalement sur le disque de réaction 72A. Seul le piston d'assistance 8A entraîné par le piston d'actionnement 4A s'appuie sur le disque de réaction 72A (déplacement dans la direction FA) et pousse ainsi la tige de poussée 7A.

Dans des conditions exceptionnelles ou de défaillance du servofrein 100A, si l'action sur la pédale de frein 103A est rapide et forte, le piston plongeur 8A peut s'appuyer directement sur le disque de réaction 72A et pousser la tige de poussée 7A indépendamment ou en complément de la poussée exercée par le piston intermédiaire 81A, lui-même poussé par le piston d'actionnement 4A. Cela est également vrai en cas de panne du servofrein électrique 100A lorsque le piston d'actionnement 4A n'est pas commandé et reste immobile, le piston intermédiaire restant lui aussi immobile.

Au repos, le piston plongeur 8A est repoussé vers l'arrière (direction FR) contre une butée 105A du corps 1A, par le ressort de coupure 9A interposé entre le piston plongeur 8A et le piston d'assistance 6A.

Cette butée 105A est une pièce reliée au corps du servofrein traverse une lumière du piston d'assistance 6A de façon à ne pas interférer avec le mouvement de ce piston. Cette butée concerne uniquement le mouvement vers l'arrière du piston plongeur 8A par rapport au corps du boîtier 1A.

Le piston d'assistance 6A est lui-même poussé en position de repos par le ressort de rappel 41A. Cette position de repos est définie directement par une butée non représentée ou indirectement par le piston d'actionnement 4A tiré dans sa position de fin de course et lui-même en butée.

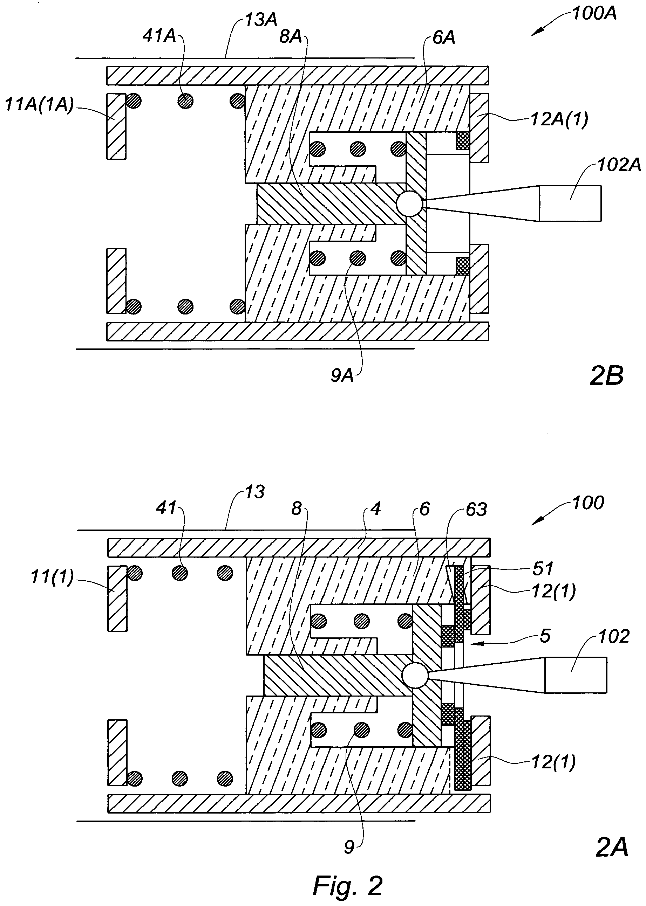

Pour simplifier la présentation de l'invention et sa comparaison avec l'état de la technique, les figures 2-4 montrent très schématiquement les seules parties du servofrein électrique concernées directement par l'invention. La description utilisera des références numériques identiques à celles-ci-dessus pour les éléments identiques et de même fonction.

La figure 2A, limitée aux éléments essentiels de l'invention, montre le corps ou boîtier 1 du servofrein limité à sa paroi avant 11 avec à gauche le maître-cylindre non représenté ici, son fond 12 et le cylindre 13 de guidage. Le boîtier 1 loge le piston d'actionnement 4 relié au mécanisme d'entraînement à crémaillères et pignons droits, roues à vis et vis du moteur électrique d'assistance. Le piston d'actionnement 4 loge le piston d'assistance 6 poussé par le ressort de rappel 41. Le piston 6 est rappelé en position de repos par le ressort de rappel 41 qui, en même temps rappelle le piston d'actionnement 4 et toute la transmission reliant le piston au moteur électrique.

Le piston plongeur 8 coulissant dans le piston d'assistance 6 est rappelé en position de repos par le ressort de coupure 9. Ainsi, il est en appui contre le fond 12 du boîtier 1. Dans cette position, la pédale rappelée par la tige de commande 102 est également en position de repos. Le piston d'assistance 6 est en position de repos en appui contre le fond 13 du boîtier. Comme cela est schématisé, le piston d'actionnement 4 est lui-même en butée de fin de course.

Le piston d'assistance 6 et le piston plongeur 8 coopèrent dans leur mouvement vers la position de repos par l'intermédiaire d'un levier 5 fonctionnant comme un levier du deuxième genre avec un point d'appui 51 sur le piston d'assistance 6, un point de charge 52 et un point d'application de la force 53 à l'extrémité opposée du levier 5.

Le levier 5 a pour fonction de réduire l'effort nécessaire pour repousser le servofrein en position de repos ou d'attente après une action sur la pédale de frein ayant déclenché une action de freinage.

La figure 2A montre cet état du servofrein électrique 100 et par comparaison, la figure 2B montre la structure du servofrein électrique 100A connu, schématisé comme le servofrein électrique 100 selon l'invention.

Dans ce servofrein électrique connu 100A au repos, le piston d'assistance 6A est en butée de même que le piston plongeur 8A contre le fond 13A du boîtier 1A repoussés par les ressorts 9A et 41A.

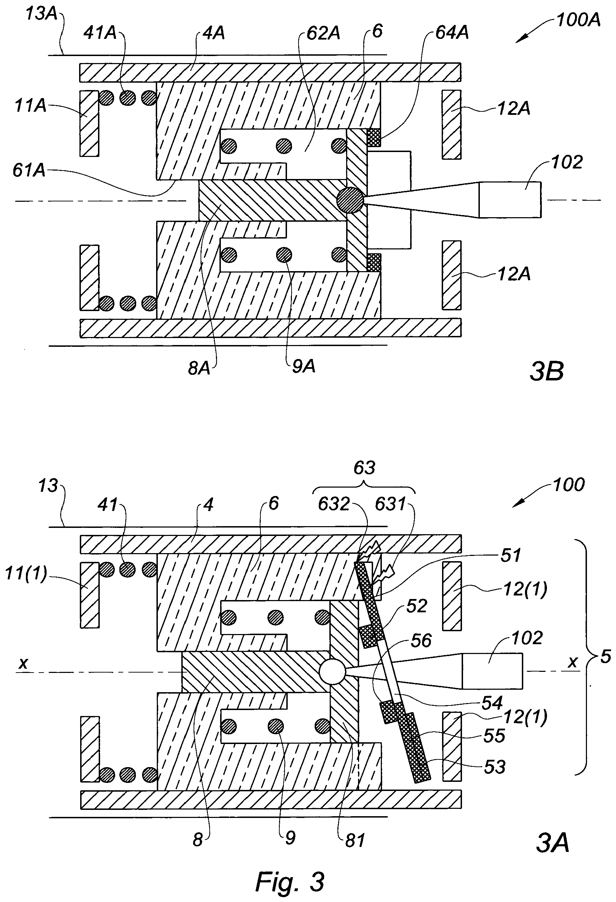

La figure 3 montre dans ses figures 3A, 3B, la position des composants du servofrein électrique 100 selon l'invention (figure 3A) et selon l'état de la technique 100A (figure 3B) après la libération de la pédale de frein.

Selon la figure 3A, la tige de commande 102 relâchée n'est plus soumise à une poussée de la pédale. Le ressort de coupure 9 a déjà repoussé le piston plongeur 6 dans sa position intermédiaire de butée définie par le levier 5 dont la première extrémité correspondant au point d'appui 51 est limitée dans son pivotement par la forme du logement 63 dans le piston 6 ; ce logement 63 défini deux points d'appui 631, 632 dont l'un (631) est d'ailleurs le point de basculement et d'appui du levier 5.

Dans cette position intermédiaire, le levier 5 non en appui est seulement tenu par le logement 63 et il retient le piston plongeur 8 poussé par son ressort de coupure 9. Le ressort de rappel 41 n'a pas encore commencé à pousser le piston d'assistance 6.

En parallèle, selon la figure 3B, dans le servofrein électrique connu 100A, le ressort de coupure 9A a repoussé le piston plongeur 8A contre la butée de fin de course 64A portée par le piston d'assistance 6A à l'extrémité de sa cavité arrière 62A.

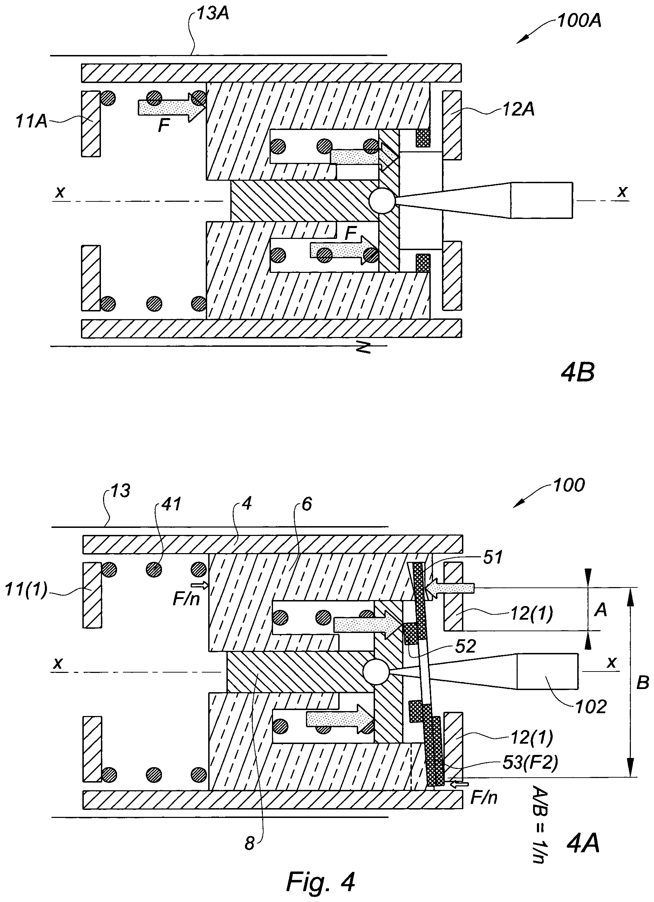

La figure 4 montre dans ses figures 4A, 4B la phase de recul vers la position de repos.

La fin du retour à la position de repos est représentée à la figure 2A et commentée ci-dessus, se traduit par une légère compression du ressort de coupure 9 et un recul du piston plongeur 8 par rapport à sa position arrière extrême de la figure 3A.

La position basculée du levier 5 représentée à la figure 3A, permet d'expliciter le fonctionnement du levier. Dans la position de la figure 3A, le levier 5 a été basculé en position de fin de course de basculement par le recul du piston plongeur 8 sous l'effet du ressort de coupure 9. Le logement 63 qui reçoit l'extrémité avant du levier 5 et en particulier son point d'appui ou de basculement 51, est un logement qui a globalement une forme trapézoïdale définissant deux points d'appui :

Un point d'appui de basculement 631 au cours duquel à partir de la position représentée, le levier 5 va basculer jusqu'à ce qu'il arrive dans la position pratiquement de fin de course de la figure 4A ou de la position de fin de course de la figure 2A. Le basculement jusque dans la position de la figure 3A est limité par le point d'appui 632 du logement 63 pour le bord avant. Ainsi, dans la position de la figure 3A, le levier 5 s'appuie à la fois dans un sens contre le point d'appui 632 et dans l'autre sens contre le point d'appui 631. Le logement 63 est un logement transversal débouchant dans la cavité arrière 62 guidant l'extrémité arrière 81 du piston plongeur 8. Ce logement transversal a son ouverture dirigée vers l'axe XX principalement dans la direction diamétrale de sorte que le levier 5 puisse lui-même être une pièce de forme diamétrale, c'est-à-dire occupant la plus grande longueur disponible dans le logement du piston d'actionnement 4 recevant le piston d'assistance 6 à l'arrière de celui-ci près de la paroi arrière 12 du boîtier 1 du servofrein électrique. Le levier 5 a une ouverture 54 formant un passage au niveau de l'axe pour permettre la traversée de la tige de commande 102 reliée à l'extrémité arrière 81 du piston plongeur 8 sans interférer avec le mouvement de la tige de commande 102.

La figure 3A montre que lorsque la seconde extrémité formant le second point d'appui 53 du levier 5, arrive en contact avec le fond 12 du boîtier, le levier 5 commence à basculer et pour faire ce basculement (voir aussi la figure 4A), la force exercée sur l'extrémité 53 pour faire basculer le levier 5, doit vaincre la force exercée par le ressort de coupure 9 sur le point d'appui intermédiaire 52. Or, cette force est dans le rapport des bras de levier entre le point d'appui 51 à la première extrémité et le point d'appui 53 à la seconde extrémité ou le bras de levier entre le premier point d'appui 51 et le point d'appui intermédiaire 52.

Comme pour faire basculer le levier 53, il faut faire avancer le piston 6, le ressort de rappel 41 doit fournir la force de réaction exercée sur l'extrémité 53, c'est-à-dire une force démultipliée selon le rapport des bras de levier indiqué ci-dessus, par rapport à la force exercée par le ressort de coupure 9 tendant à repousser le levier 5.

Selon la figure 4A, le ressort de rappel 41 repousse le piston d'assistance 6 de sorte que l'extrémité 53 du levier 5 rencontre le fond 12 du boîtier 1. L'effet de levier commence alors à jouer. Avant d'atteindre la position de repos, le ressort de rappel 41 doit vaincre la poussée du ressort de coupure 9 et le frottement des pistons 4, 6 et de la transmission.

Au cours de ce mouvement de recul vers la position de repos, les bras de levier A et B entre les points (51-52) et (51-53) sont tels que A/B = 1/n dépendant de la géométrie choisie du levier de ces points d'appui.

L'ensemble mobile formé par les pistons 6, 8 et le levier 5 étant soumis à l'action des ressorts 9, 41, la force F développée par le ressort de coupure 9 s'exerce sur le point d'appui 52 du levier 5 dont la seconde l'extrémité 53 exerce la réaction $F_2$ en fonction du bras de levier B par rapport au point d'appui 51 contre la force F, opposée, exercée sur le point 52 :

$$F_2 = F\,(1/n) = F/n$$

La poussée 41 que doit exercer le ressort 41 pour faire avancer le piston 6 est l'opposée de la force $F_2$ soit en amplitude : F/n.

Selon cette disposition, la force exercée sur la tige de commande 102 est toujours la force développée par le ressort de coupure 9, c'est-à-dire la force F alors que la force démultipliée exercée par le ressort de rappel 41 ne correspond qu'à une fraction de cette force F.

Généralement, la force F exercée au repos sur la tige de commande 102 et la pédale de frein est de 100N.

A titre d'exemple le rapport des bras de levier A et B qui est de ¼, la poussée que doit exercer le ressort de rappel 41 sur le piston d'assistance 8 pour vaincre la réaction du ressort de coupure 9 (100 N) est diminuée dans la même proportion, ce qui signifie 25 N. A cette force de 25 N, s'ajoute l'effort que le ressort de rappel 41 doit fournir pour vaincre le frottement de pistons 4, 6 dans leur guidage et le frottement de la transmission auquel est relié le piston d'actionnement et le piston d'assistance (4, 6).

A titre de comparaison, pour le servofrein électrique 100A de la figure 4B, le piston plongeur 8A doit être repoussé avec une force F pour repousser la tige de commande 102A et la pédale de frein et venir en position de repos.

Dans les figures, le levier 5 est représenté très schématiquement comme une pièce droite. Or, le logement transversal 63 débouche près du bord arrière de la cavité cylindrique 62 du piston d'assistance 6. Comme en position de repos (figure 2A), le piston 6 est appuyé contre le fond 12 du boîtier 1, des cales 55, 56 sont prévues sur le levier 5 en plus de la cale constituée par le point d'appui intermédiaire 52. Ces cales 55, 56 de même que le point d'appui 52, peuvent être réalisés par des déformations ou des cintrages ou nervures locales réalisées dans le levier 5. Les cales 55, 56 peuvent également avoir un effet d'amortissement du mouvement de fin de course.

NOMENCLATURE

| | | |
|---|---|---|
| 100 | | servofrein électrique |
| 1 | | corps du servofrein électrique |
| | 11 | paroi avant |
| | 12 | fond |
| | 13 | cylindre de guidage |
| 4 | | piston d'actionnement |
| | 41 | ressort de rappel |
| 5 | | levier |
| | 51 | point d'appui/première extrémité |
| | 52 | point d'appui/point d'appui intermédiaire |
| | 53 | point d'appui/seconde extrémité |
| | 54 | ouverture de passage |
| | 55, 56 | cales |
| 6 | | piston d'assistance |

| | | |
|---|---|---|
| 62 | cavité cylindrique arrière | |
| 621 | fond | |
| 63 | logement/logement transversal | |
| 8 | piston plongeur | |
| 9 | ressort de coupure | |

| | | |
|---|---|---|
| 100A | servofrein électrique connu | |
| 101 A | maître-cylindre | |
| 102A | tige de commande | |
| 103A | tige de poussée | |
| 104A | piston du maître-cylindre | |
| 105A | butée | |
| 1A | corps du servofrein électrique | |
| 11A | paroi avant | |
| 12A | fond | |
| 13A | cylindre de guidage | |
| 30A | moteur électrique | |
| 31A | transmission | |

| | | |
|---|---|---|
| 4A | piston d'actionnement | |
| 41A | ressort de rappel | |
| 42A | butée d'entraînement | |
| 6A | piston d'assistance | |
| 61A | cavité cylindrique avant | |
| 62A | cavité cylindrique arrière | |
| 64A | butée de fin de course | |
| 7A | tige de poussée | |
| 71A | tête de la tige de poussée | |
| 72A | disque de réaction | |
| 8A | piston plongeur | |
| 81A | piston intermédiaire | |
| 9A | ressort de coupure | |

**Revendications**

1. Servofrein électrique commandant un maître-cylindre de circuit de frein, relié à une tige de commande actionnée par la pédale de frein, comprenant :

   - un corps de servofrein (1) recevant un piston d'actionnement (4) entraîné en translation par un moteur électrique et poussant le piston du maître-cylindre par l'intermédiaire d'un piston d'assistance (6) agissant sur la tige de poussée reliée au piston du maitre-cylindre,
   - un piston plongeur (8) logé coulissant dans le piston d'assistance (6) et relié à la tige de commande (102), elle-même reliée à la pédale de frein,
   - un ressort de coupure (9) interposé entre le piston d'assistance (6) et le piston plongeur (8) pour repousser celui-ci,
   - le piston plongeur (8) avançant librement d'une faible distance au début d'une action de freinage sans toucher la tige de poussée, contre la réaction du ressort de coupure (9) en cas de freinage normal ou pour pousser directement la tige de poussée en cas de défaillance du servofrein électrique,
   - le piston plongeur (8) étant rappelé en position de pédale relâchée à la fin d'une action de freinage par rapport au piston d'assistance (6) repoussé par le ressort de coupure (9),

   **caractérisé en ce que**
   le piston d'assistance (6) est muni d'un levier du second genre (5) relié de manière articulée par sa première extrémité (51) à l'arrière du piston d'assistance (6) et appuyé par un point intermédiaire (52) proche de sa première extrémité, contre le piston plongeur (8), la seconde extrémité (53) étant destinée à s'appuyer contre la butée de fin de course arrière (13) constituée par le boîtier (1) du servofrein et définissant la position de repos du servofrein en basculant sous la poussée du ressort de rappel (41) repoussant le piston d'assistance (6) portant le point d'appui (51) du levier (5) et comprimant le ressort de coupure (9) par le piston plongeur (8) appuyé contre le point intermédiaire (52) du levier (5).

2. Servofrein électrique selon la revendication 1, **caractérisé en ce que**
   le piston d'assistance (6) comporte un logement transversal (63) recevant la première extrémité (51) du levier (5) et limitant le basculement du levier (5) par rapport au piston (6) entre la position de repos du piston (6), le levier (5) étant sensiblement parallèle au fond et une position basculée du levier (5) retenant le piston plongeur (8), l'effet du levier (5) s'exerçant après une action de freinage, lorsque la deuxième extrémité (53) du levier arrive contre la butée (12) de fin de course et le point d'appui intermédiaire (52), repousse le piston plongeur contre l'action du ressort de coupure (9) par la poussée exercée par le ressort de rappel (41) sur le piston d'assistance (6), poussant ainsi le premier point d'appui (51) du levier (5) avec la force ($F_3$) égale à la réaction ($F_2$) du point d'appui (53) à la seconde extrémité du levier (5), réaction démultipliée par rapport à la force antagoniste exercée par le ressort de coupure (9) sur le piston plongeur portant le point d'appui intermédiaire (52) du levier (5).

3. Servofrein électrique selon la revendication 2, **caractérisé en ce que**
   le logement transversal (63) a une section sensiblement trapézoïdale avec un point de basculement (631) et un point d'appui (632) pour le levier (5) en limite de basculement.

4. Servofrein électrique selon la revendication 1, **caractérisé en ce que**
   le levier (5) a une disposition diamétrale occupant la plus grande dimension diamétrale disponible à l'arrière du piston d'assistance (6) dans le cylindre du piston d'actionnement (4) pour avoir la plus grande longueur possible.

5. Servofrein électrique selon la revendication 6, **caractérisé en ce que**
le levier (5) a une ouverture (54) pour le passage de la tige de commande (102) reliée à l'arrière du piston plongeur (8).

6. Servofrein électrique selon la revendication 1, **caractérisé en ce que**
le levier et/ou l'arrière du piston d'assistance (6) ont des appuis (55, 56) pour définir la position de fin de course de repos du levier (5).

7. Servofrein électrique selon la revendication 12, **caractérisé en ce que**
le logement transversal (63) débouche près du bord de la cavité arrière (62).

**Patentansprüche**

1. Elektrische Servobremse, die einen Bremskreis-Hauptbremszylinder steuert, verbunden mit einer vom Bremspedal betätigten Steuerstange, die enthält:

- einen Servobremsenkörper (1), der einen Betätigungskolben (4) aufnimmt, welcher von einem Elektromotor in Translation angetrieben wird und den Kolben des Hauptbremszylinders mittels eines Hilfskolbens (6) schiebt, der auf die mit dem Kolben des Hauptbremszylinders verbundene Schubstange einwirkt,
- einen Tauchkolben (8), der gleitend im Hilfskolben (6) untergebracht und mit der Steuerstange (102) verbunden ist, die selbst mit dem Bremspedal verbunden ist,
- eine Abschaltfeder (9), die zwischen den Hilfskolben (6) und den Tauchkolben (8) eingefügt ist, um diesen zurückzuschieben,
- wobei der Tauchkolben (8) sich zu Beginn eines Bremsvorgangs frei um eine kurze Entfernung vorwärtsbewegt, ohne die Schubstange zu berühren, gegen die Reaktion der Abschaltfeder (9) im Fall eines normalen Bremsens, oder um die Schubstange im Fall eines Ausfalls der elektrischen Servobremse direkt zu schieben,
- wobei der Tauchkolben (8) am Ende eines Bremsvorgangs bezüglich des von der Abschaltfeder (9) zurückgeschobenen Hilfskolbens (6) in die Stellung des losgelassenen Pedals zurückgestellt wird, **dadurch gekennzeichnet, dass** der Hilfskolben (6) mit einem Hebel der zweiten Art (5) versehen ist, der über sein erstes Ende (51) mit der Rückseite des Hilfskolbens (6) gelenkig verbunden ist und durch einen Zwischenpunkt (52) nahe seines ersten Endes gegen den Tauchkolben (8) gedrückt wird, während das zweite Ende (53) dazu bestimmt ist, sich gegen den hinteren Endanschlag (13) anzudrücken, der vom Gehäuse (1) der Servobremse gebildet wird und die Ruhestellung der Servobremse definiert, indem es unter dem Schub der Rückstellfeder (41) kippt, die den Hilfskolben (6) zurückschiebt, der den Auflagepunkt (51) des Hebels (5) trägt und die Abschaltfeder (9) durch den gegen den Zwischenpunkt (52) des Hebels (5) angedrückten Tauchkolben (8) komprimiert.

2. Elektrische Servobremse nach Anspruch 1, **dadurch gekennzeichnet, dass** der Hilfskolben (6) eine Queraufnahme (63) aufweist, die das erste Ende (51) des Hebels (5) aufnimmt und das Kippen des Hebels (5) bezüglich des Kolbens (6) zwischen der Ruhestellung des Kolbens (6), in der der Hebel (5) im Wesentlichen parallel zum Boden ist, und einer gekippten Stellung des Hebels (5) begrenzt, die den Tauchkolben (8) zurückhält, wobei die Wirkung des Hebels (5) nach einem Bremsvorgang ausgeübt wird, wenn das zweite Ende (53) des Hebels gegen den Endanschlag (12) kommt und der Zwischenauflagepunkt (52) den Tauchkolben gegen die Wirkung der Abschaltfeder (9) durch den Schub zurückschiebt, der von der Rückstellfeder (41) auf den Hilfskolben (6) ausgeübt wird, wodurch der erste Auflagepunkt (51) des Hebels (5) mit der Kraft ($F_3$) gleich der Reaktion ($F_2$) des Auflagepunkts (53) am zweiten Ende des Hebels (5) geschoben wird, Reaktion verstärkt bezüglich der von der Abschaltfeder (9) auf den Tauchkolben ausgeübten gegenwirkenden Kraft, der den Zwischenauflagepunkt (52) des Hebels (5) trägt.

3. Elektrische Servobremse nach Anspruch 2, **dadurch gekennzeichnet, dass** die Queraufnahme (63) einen im Wesentlichen trapezförmigen Querschnitt mit einem Kipppunkt (631) und einem Auflagepunkt (632) für den Hebel (5) an der Kippgrenze hat.

4. Elektrische Servobremse nach Anspruch 1, **dadurch gekennzeichnet, dass** der Hebel (5) eine diametrale Anordnung hat, die die größte verfügbare diametrale Abmessung hinter dem Hilfskolben (6) im Zylinder des Betätigungskolbens (4) einnimmt, um die größtmögliche Länge zu haben.

5. Elektrische Servobremse nach Anspruch 6, **dadurch gekennzeichnet, dass** der Hebel (5) eine Öffnung (54) für den Durchgang der Steuerstange (102) hat, die mit der Rückseite des Tauchkolbens (8) verbunden ist.

**6.** Elektrische Servobremse nach Anspruch 1, **dadurch gekennzeichnet, dass** der Hebel und/oder die Rückseite des Hilfskolbens (6) Auflagen (55, 56) haben, um die Ruhe-Endstellung des Hebels (5) zu definieren.

**7.** Elektrische Servobremse nach Anspruch 12, **dadurch gekennzeichnet, dass** die Queraufnahme (63) nahe dem Rand des hinteren Hohlraums (62) mündet.

**Claims**

**1.** Electric brake booster controlling a brake circuit master cylinder, connected to a control rod operated by the brake pedal, comprising:

- a brake booster (1) having an actuating piston (4) translationally driven by an electric motor and pushing the piston of the master cylinder via a boost piston (6) acting on the push rod connected to the piston of the master cylinder,
- a plunger piston (8) housed with the ability to slide in the boost piston (6) and connected to the control rod (102), itself connected to the brake pedal,
- a cutoff spring (9), interposed between the boost piston (6) and the plunger piston (8) to push the latter back,
- the plunger piston (8) advancing freely over a short distance at the beginning of a braking action without touching the push rod, against the reaction of the cutoff spring (9) in the event of normal braking or to push directly on the push rod in the event of failure of the electric brake booster,
- the plunger piston (8) being returned to the pedal-released position at the end of a braking action with respect to the boost piston (6) pushed back by the cutoff spring (9),

**characterized in that**
the boost piston (6) is equipped with a second-order lever (5) connected in an articulated manner by its first end (51) to the rear of the boost piston (6) and bearing via an intermediate point (52) close to its first end against the plunger piston (8), the second end (53) being intended to bear against the rear end-of-travel stop (13) consisting of the casing (1) of the brake booster and defining the position of rest of the brake booster by pivoting under the thrust of the return spring (41) pushing back the boost piston (6) bearing the pressure point (51) of the lever (5) and compressing the cutoff spring (9) by means of the plunger piston (8) pressed against the intermediate point (52) of the lever (5).

**2.** Electric brake booster according to Claim 1, **characterized in that**
the boost piston (6) comprises a transverse housing (63) housing the first end (51) of the lever (5) and limiting the pivoting of the lever (5) with respect to the piston (6) between the position of rest of the piston (6), the lever (5) being substantially parallel to the end wall and a tilted position of the lever (5) retaining the plunger piston (8), the effect of the lever (5) being applied after a braking action, when the second end (53) of the lever comes up against the end-of-travel stop (12) and the intermediate pressure point (52), pushes the plunger piston back against the action of the cutoff spring (9) via the thrust exerted by the return spring (41) on the boost piston (6), thus pushing the first pressure point (51) of the lever (5) with the force ($F_3$) equal to the reaction ($F_2$) of the pressure point (53) at the second end of the lever (5), the reaction being scaled down with respect to the opposition force exerted by the cutoff spring (9) on the plunger piston bearing the intermediate pressure point (52) of the lever (5).

**3.** Electric brake booster according to Claim 2, **characterized in that**
the transverse housing (63) has a substantially trapezoidal cross section with a pivot point (631) and a pressure point (632) for the lever (5) at the limit of pivoting.

**4.** Electric brake booster according to Claim 1, **characterized in that**
the lever (5) is arranged diametrically occupying the largest diametrical dimension available behind the boost piston (6) in the cylinder of the actuating piston (4), so as to have the greatest possible length.

**5.** Electric brake booster according to Claim 6, **characterized in that**
the lever (5) has an opening (54) for the passage of the control rod (102) connected to the rear of the plunger piston (8).

**6.** Electric brake booster according to Claim 1, **characterized in that**
the lever and/or the rear of the boost piston (6) have rests (55, 56) to define the end-of-travel rest position of the lever (5).

**7.** Electric brake booster according to Claim 12, **characterized in that**
the transverse housing (63) opens near to the edge of the rear cavity (62).

FIG. 1

EP 2 733 032 B1

2B

2A

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 202010017605 U1